# EUROPÄISCHE PATENTSCHRIFT

(11) **EP 2 575 562 B1**
(45) Veröffentlichungstag und Bekanntmachung des Hinweises auf die Patenterteilung: **03.12.2014**
(21) Anmeldenummer: 10726054.9
(22) Anmeldetag: 11.06.2010
(51) Int. Cl.: A47J 31/06

(54) **VORRICHTUNG ZUM EINKAPSELN VON AROMAFESTSTOFFEN SOWIE BEHÄLTER MIT EINER SOLCHEN VORRICHTUNG**
DEVICE FOR ENCAPSULATING FLAVORING SOLIDS AND CONTAINER HAVING SUCH A DEVICE
DISPOSITIF D'ENCAPSULATION DE PRODUITS AROMATIQUES ET RÉCIPIENT DOTÉ D'UN DISPOSITIF DE CE TYPE

(30) Priorität: 31.05.2010 DE 202010007395 U
(43) Veröffentlichungstag der Anmeldung: 10.04.2013
(73) Patentinhaber: Riensch & Held GmbH & Co. KG, 21035 Hamburg (DE)
(72) Erfinder: JUSTUS, Christian, 20149 Hamburg (DE); MENDS-COLE, Sebastian, 22527 Hamburg (DE); PFROMM, Eric, 20257 Hamburg (DE)
(74) Vertreter: Eisenführ Speiser
(86) Internationale Anmeldenummer: PCT/EP2010/058224
(87) Internationale Veröffentlichungsnummer: WO 2011/150980

(56) Entgegenhaltungen:
- EP-A1- 1 029 484
- DE-A1- 19 637 899
- US-B1- 6 272 974

## Beschreibung

Die Erfindung betrifft eine Vorrichtung zum Einkapseln von in eine Flüssigkeit, insbesondere Wasser, gegebenen Aromafeststoffen, insbesondere Teegut oder Kaffee, mit einem zwischen einer Anfangsstellung und einer Endstellung um eine Drehachse drehbar gelagerten flügelförmigen Drehschieber, der in seiner Endstellung einen die Aromafeststoffe aufnehmenden Raum begrenzt, wobei die Vorrichtung zum Einbau in einen Behälter ausgebildet ist, dessen Oberseite zum Einfüllen und zur Abgabe der Flüssigkeit eine Öffnung aufweist, die durch einen Deckel verschließbar ist, welcher zum Schließen und Öffnen der Behälteröffnung einer Drehbewegung unterworfen wird, sowie ferner einen Behälter, insbesondere Trinkbecher, mit einem, vorzugsweise becherförmigen, Behältergehäuse, der von einer Wandung und einem Boden begrenzt wird und dessen dem Boden gegenüberliegende Oberseite zum Einfüllen und zur Abgabe von Aromafeststoffen, insbesondere Teegut oder Kaffee, enthaltender Flüssigkeit eine Behälteröffnung aufweist, und mit einem Deckel zum Verschließen der Behälteröffnung, wobei der Deckel so ausgebildet ist, dass er zum Schließen und Öffnen der Behälteröffnung einer Drehbewegung unterworfen wird, mit einer solchen Vorrichtung.

Eine solche Vorrichtung, die beispielsweise aus der EP 1 029 484 A1 bekannt ist, erlaubt eine gezielte Beendigung des Ziehprozesses der Aromafeststoffe durch Eingreifen des Benutzers, indem dieser den Drehschieber von seiner Anfangsstellung in seine Endstellung verdreht. Hierzu werden zunächst die Aromafeststoffe, beispielsweise Teegut, in die Flüssigkeit gegeben, so dass sie mit der, vorzugsweise bereits erhitzten, Flüssigkeit in Kontakt gelangen und entsprechende Aromastoffe an diese abgeben. Dabei befindet sich der Drehschieber in seiner Anfangsstellung. Nach Ablauf der Ziehzeit wird der Drehschieber einer Drehbewegung unterworfen, wodurch er von einer Anfangsstellung in eine Endstellung verbracht wird und dabei die Aromafeststoffe in einen Raum mitnimmt, der vom Drehschieber in einer Endstellung begrenzt wird. Wenn die Aromafeststoffe durch Rotation des Drehschiebers vollständig in jenen Raum verbracht worden sind, besteht kein Kontakt mehr zu der umgebenden Flüssigkeit, wodurch der Ziehprozess der Aromafeststoffe in der Flüssigkeit gezielt beendet wird. Da der Drehschieber in seiner Endstellung den nun die Aromafeststoffe aufnehmenden Raum begrenzt, sind die Aromafeststoffe eingekapselt und von der übrigen Flüssigkeit getrennt. Dadurch wird verhindert, dass die Aromafeststoffe auf unerwünschte Weise jenen Raum wieder verlassen und mit der umgebenden Flüssigkeit wieder in Kontakt treten können. Somit brauchen die Aromafeststoffe auch nach Beendigung des Zielprozesses nicht unbedingt sofort aus der Flüssigkeit entnommen zu werden.

Auch wenn sich die eingangs genannte Vorrichtung in der Praxis bewährt hat, besteht ein Bedarf an einer weiteren Vereinfachung ihrer Handhabung.

Diese Aufgabe wird gemäß einem ersten Aspekt gelöst durch eine Vorrichtung zum Einkapseln von in eine Flüssigkeit, insbesondere Wasser, gegebenen Aromafeststoffen, insbesondere Teegut oder Kaffee, mit einem feststehenden Element und einem zwischen einer Anfangsstellung und einer Endstellung um eine Drehachse am feststehenden Element drehbar gelagerten flügelförmigen Drehschieber, der in seiner Endstellung einen die Aromafeststoffe aufnehmenden Raum begrenzt, wobei die Vorrichtung zum Einbau in einen Behälter ausgebildet ist, dessen Oberseite zum Einfüllen und zur Abgabe der Flüssigkeit eine Öffnung aufweist, die durch einen Deckel verschließbar ist, welcher zum Schließen und

Öffnen der Behälteröffnung einer Drehbewegung unterworfen wird, dadurch gekennzeichnet, dass der Drehschieber mindestens ein Eingriffsmittel aufweist, das so ausgebildet ist, dass es in berührende Anlage an einen Abschnitt des Deckels zumindest während dessen Drehbewegung zum Schließen der Behälteröffnung bringbar ist, wodurch der Drehschieber in seine Endstellung drehbar ist, das feststehende Element mit seiner bei Einbau der Vorrichtung in den Behälter zur Behälteröffnung benachbarten Oberseite an einem Ring befestigt ist, der bei Einbau der Vorrichtung in den Behälter dessen Öffnung begrenzt, in der Endstellung des Drehschiebers der die Aromafeststoffe aufnehmende Raum nicht nur vom feststehenden Element und dem Drehschieber, sondern an seiner bei Einbau der Vorrichtung in den Behälter zur Behälteröffnung benachbarten Oberseite durch ein oberes Abschlusselement begrenzt wird, und der Ring, das feststehende Element und der Drehschieber eine Baueinheit bilden, die durch die Behälteröffnung in den Behälter einsetzbar und durch diese wieder herausnehmbar ist.

Ferner wird diese Aufgabe gemäß einem zweiten Aspekt der Erfindung gelöst durch einen Behälter, insbesondere Trinkbecher, mit einem, vorzugsweise becherförmigen, Behältergehäuse, der von einer Wandung und einem Boden begrenzt wird und dessen dem Boden gegenüberliegende Oberseite zum Einfüllen und zur Abgabe von Aromafeststoffen, Insbesondere Teegut oder Kaffee, enthaltender Flüssigkeit eine Behälteröffnung aufweist, und mit einem Deckel zum Verschließen der Behälteröffnung, wobei der Deckel so ausgebildet ist, dass er zum Schließen und Öffnen der Behälteröffnung einer Drehbewegung unterworfen wird, gekennzeichnet durch eine Vorrichtung gemäß dem ersten Aspekt der Erfindung.

Gemäß der Erfindung wird die Drehbewegung des Deckels eines Behälters in seiner Schließstellung dazu benutzt, auch den Drehschieber in seine Endstellung zu verschwenken, um die Aromafeststoffe In dem vom Drehschieber in seiner Endstellung begrenzten Raum einzukapseln. Die Drehbewegung des Deckels wird somit auf den Drehschieber übertragen. Dies wird erfindungsgemäß dadurch erreicht, dass der Drehschieber mithilfe eines Eingriffsmittels in Eingriff mit dem Deckel zumindest während dessen Drehbewegung zum Schließen der Behälteröffnung bringbar und dadurch in seine Endstellung drehbar ist. Der Vorteil der Erfindung besteht also darin, dass für das Verbringen des Drehschiebers in seine Endstellung einerseits und für die Schließbewegung des Deckels andererseits keine getrennte Handhabung vonnöten ist, sondern gemeinsam eine einzige Drehbewegung ausreicht, indem auf den Deckel ein entsprechendes Drehmoment aufgebracht wird. Mit einer einzigen Handhabungsmaßnahme werden somit erfindungsgemäß sowohl der Deckel in seine Schließstellung als auch der Drehschieber in seine Endstellung zum Einkapseln der Aromafeststoffe verbracht.

Bevorzugte Ausführungen und Weiterbildungen der Erfindung sind in den abhängigen Ansprüchen angegeben.

Nachfolgend wird ein bevorzugtes Ausführungsbeispiel der Erfindung anhand der beiliegenden Zeichnungen näher erläutert. Es zeigen:
Fig. 1 in perspektivischer Ansicht einen von einem Deckel geschlossenen Trinkbecher gemäß einem bevorzugten Ausführungsbeispiel;
Fig. 2 in ähnlicher perspektivischer Ansicht wie Fig. 1 den Trinkbecher im Längsschnitt mit einem darin eingesetzten Drehmechanismus zum Einkapseln von Aromafeststoffen gemäß einer bevorzugten Ausführung der Erfindung;
Fig. 3 eine perspektivische Draufsicht auf einen in den Trinkbecher einzusetzenden Einsatz;
Fig. 4 eine im Wesentlichen seitliche perspektivische Ansicht des Drehmechanismus gemäß einer bevorzugten Ausführung der Erfindung;
Fig. 5 eine perspektivische Ansicht des Drehmechanismus von Fig. 4 im Wesentlichen von unten; und
Fig. 6 eine Unteransicht auf den Deckel des Trinkbechers.

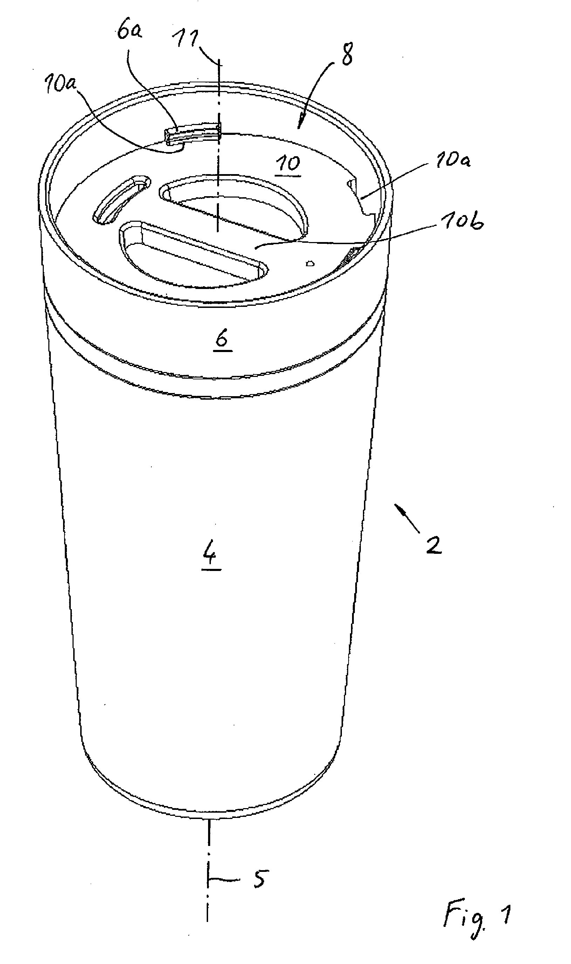

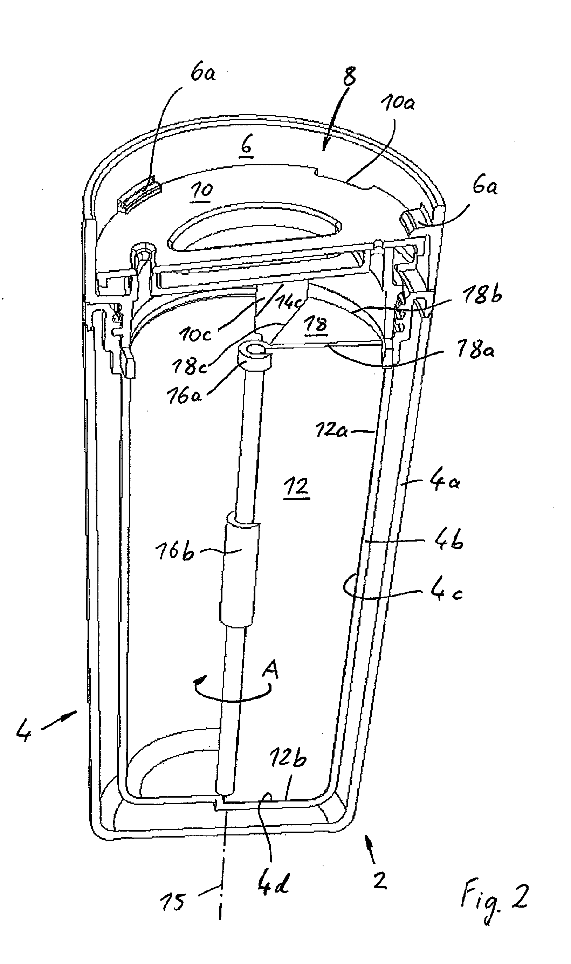

Fig. 1 zeigt in perspektivischer Ansicht einen Trinkbecher 2, während in Fig. 2 der Trinkbecher 2 im Längsschnitt mit einem darin erkennbar eingesetzten Drehmechanismus zum Einkapseln von Aromafeststoffen dargestellt ist. Der Drehmechanismus wird an einer späteren Stelle der Beschreibung im Einzelnen erläutert.

Der Trinkbecher 2 weist ein becherförmiges Gehäuse bzw. einen becherförmigen Hohlkörper 4 auf, welcher durch eine Seitenwandung begrenzt und an seiner Unterseite durch einen Boden abgeschlossen wird. Auf der dem Boden gegenüberliegenden Oberseite des becherförmigen Hohlkörpers 4 ist ein Ring 6 angeordnet, der eine Öffnung 8 begrenzt. Die Öffnung 8 dient zum Einfüllen von Flüssigkeit in den Trinkbecher 2 und zur Abgabe der Flüssigkeit aus dem Trinkbecher 2 und wird deshalb auch als Behälteröffnung 8 bezeichnet. Der Hohlkörper 4 und der aufgesetzte Ring 6 sind rotationssymmetrisch ausgebildet und bilden somit einen Rotationskörper, dessen Rotations- bzw. Mittelachse in Fig. 1 strichpunktiert gezeigt und mit dem Bezugszeichen "5" bezeichnet ist. Demnach haben sowohl der Hohlkörper 4 als auch der Ring 6 einen kreisförmigen Querschnitt.

Die an der Oberseite des Trinkbechers 2 ausgebildete und vom Ring 6 begrenzte Trinkbecheröffnung 8 lässt sich mit einem Deckel 10 verschließen. In den Figuren 1 und 2 ist der Deckel 10 in seiner Schließstellung gezeigt, in der er die Trinkbecheröffnung 8 verschließt. Der Deckel 10 hat ebenfalls im Wesentlichen eine Kreisform, dessen Außendurchmesser geringfügig kleiner als der lichte Durchmesser des Ringes 6 ist. Zum Öffnen und Schließen muss der Deckel 10 um eine Drehachse gedreht werden, die durch dessen Mittelpunkt verläuft und in Fig. 1 als strichpunktierte Linie dargestellt und mit dem Bezugszeichen "11" gekennzeichnet ist. Im dargestellten Ausführungsbeispiel fällt die Drehachse 11 des Deckels 10 mit der Rotationsachse 5 des Hohlkörpers 4 zusammen. Das Öffnen und Schließen des Deckels 10 erfolgt nach dem Prinzip des Bajonettverschlusses. Hierzu sind an definierten Stellen an der Innenseite des Ringes 6 Vorsprünge 6a und am Umfang des Deckels 10 entsprechende Aussparungen 10a ausgebildet. Zum Herausnehmen oder Einlegen des Deckels 10 müssen die Aussparungen 10a zu den Vorsprüngen 6a entsprechend ausgerichtet sein, so dass die Vorsprünge 6a in die Aussparungen 10a eingreifen. Zum Schließen wird der Deckel 10 um seine Drehachse 11 gedreht, wodurch der Deckel 10 mit seinem Umfang die Vorsprünge 6a außerhalb der Aussparungen 10a lose untergreift. Auf diese Weise wird der Deckel 10 am Ring 6 und somit am Trinkbecher 2 verriegelt. In dieser Stellung ist der Deckel 10 in den Figuren 1 und 2 gezeigt. Zum Drehen des Deckels 10 durch einen Benutzer ist im Körper des Deckels 10 ein diametraler Steg 10b vorgesehen, der als Griff dient.

Wie insbesondere Fig. 2 erkennen lässt, ist im dargestellten Ausführungsbeispiel der becherförmige Hohlkörper 4 doppelwandig ausgeführt und weist eine Auβenwandung 4a auf, in deren Inneres ein Einsatz 4b angeordnet ist, dessen Wandung zur Außenwandung 4a beabstandet ist. Somit bildet auch der Einsatz 4b einen entsprechenden becherförmigen Hohlkörper mit zur Trinkbecheröffnung 8 offenen Oberseite, wo der Einsatz 4b in nicht näher bezeichneter Weise an der Außenwandung 4a des Hohlkörpers 4 befestigt ist. Beim Einsatz 4b handelt es sich ebenfalls um einen Rotationskörper, der rotationssymmetrisch zur Außenwandung 4a angeordnet ist, so dass dessen Rotationsachse von der Rotationsachse 5 (Fig. 1) gebildet wird.

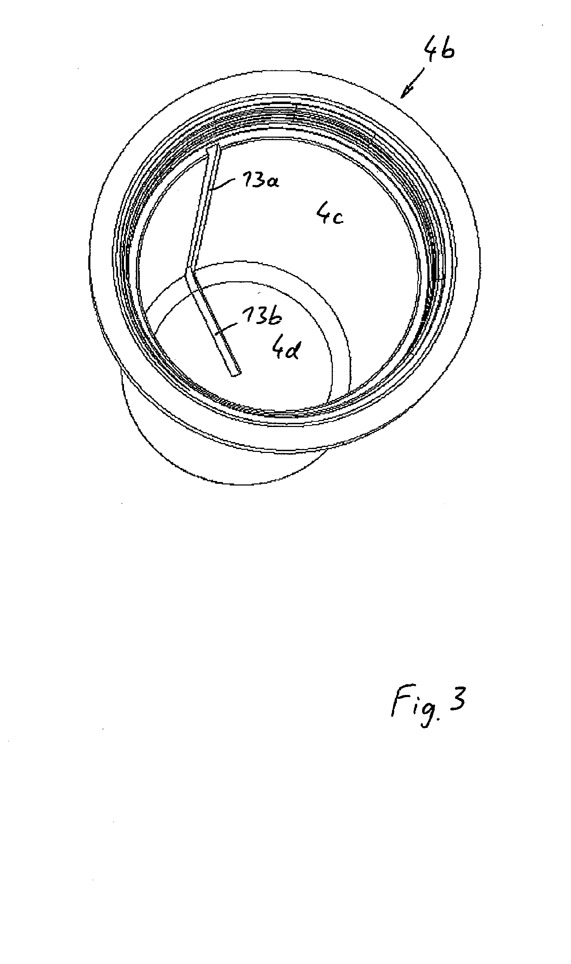

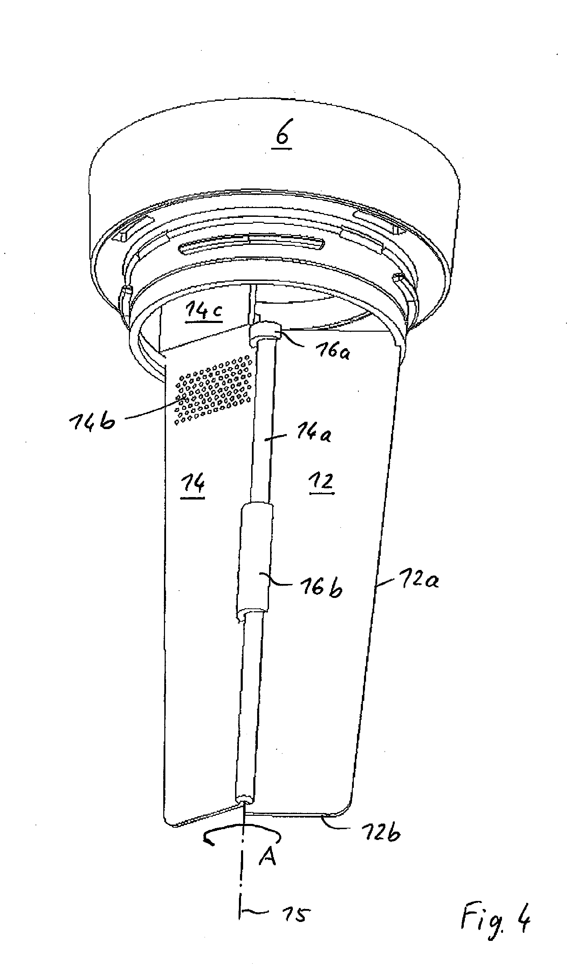

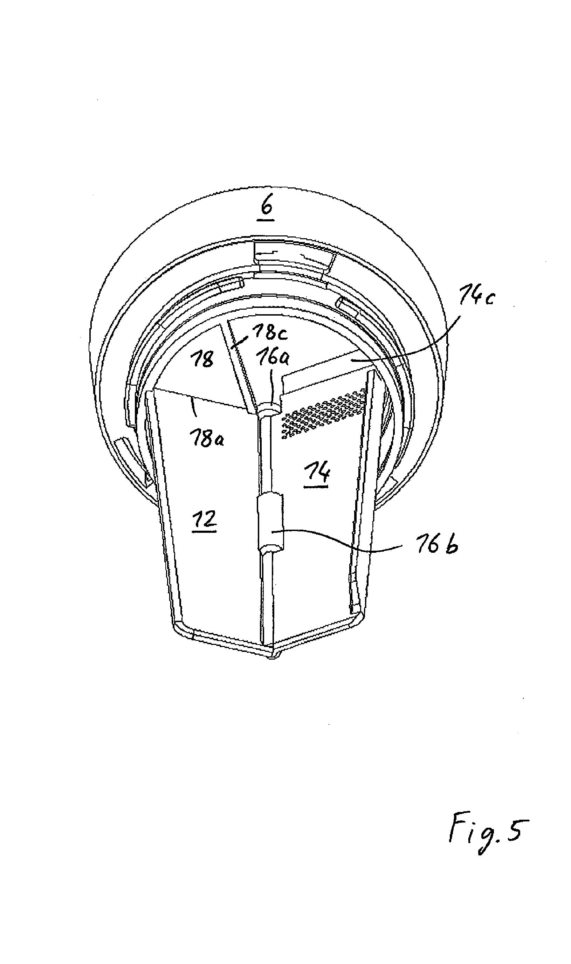

Wie insbesondere Fig. 2 erkennen lässt, ist im Inneren des Einsatzes 4b und somit im Inneren des Hohlkörpers 4 ein feststehendes plattenförmiges Wandelement 12 angeordnet, das auch als sog. "Schwert" bezeichnet werden kann. Das feststehende Wandelement 12 erstreckt sich in Längsrichtung sowie ferner radial von der Mittelachse 5 (Fig. 1) bis zur Innenseite der Wandung des Einsatzes 4b und schließt dabei mit seinem benachbarten Rand 12a an der Innenseite 4c des Einsatzes 4b sowie mit seinem Rand 12b am Boden 4d des Einsatzes 4b (vorzugsweise im Wesentlichen dichtend) ab. Für eine bessere Fixierung des Wandelementes 12 gegenüber dem Einsatz 4b und somit gegenüber dem Hohlkörper 4 des Trinkbechers 2 ist an der Innenseite 4c des Einsatzes 4b eine in axialer Richtung verlaufende erste Nut 13a ausgebildet, an der sich in radialer Richtung im Boden 4d des Einsatzes 4b eine zweite Nut 13b anschließt, wie in Fig. 3 gezeigt ist. Dabei ist das feststehende Wandelement 12 mit seinem äußeren Seitenrand 12a in die erste Nut 13a in der Innenseite 4c des Einsatzes 4b und mit seinem unteren Rand 12b in die zweite Nut 13b im Boden 4d des Einsatzes 4b gesteckt, wie eine vergleichende Betrachtung der Figuren 2 und 3 erkennen lässt. Wie die Figuren 4 und 5 erkennen lassen, ist das Wandelement 12 mit seiner Oberseite am Ring 6 befestigt.

Ferner zeigen die Figuren 4 und 5, dass ein Drehschieber 14 um eine Drehachse 15 drehbar am Wandelement 12 gelagert ist. Wie die Figuren 2 und 4 ferner erkennen lassen, verläuft die Drehachse 15 entlang des inneren Seitenrandes des Wandelementes 12. Bei Einbau der in Fig. 4 gezeigten Anordnung aus feststehendem Wandelement 12 und gegenüber diesem drehbaren Drehschieber 14 in den inneren Einsatz 4b des Hohlkörpers 4 des Trinkbechers 2 (vgl. Fig. 2) fällt die Drehachse 15 des Drehschiebers 14 mit der Rotationsachse 5 des Hohlkörpers 4 des Trinkbechers 2 (Fig. 1) im Wesentlichen zusammen.

Der Drehschieber 14, der alternativ auch als Drehschwert oder Drehflügel bezeichnet werden kann, hat im dargestellten Ausführungsbeispiel wie das feststehende Wandelement 12 eine Plattenform und auch etwa die gleichen Relativabmessungen und erstreckt sich wie das Wandelement 12 radial von seiner Drehachse 15 bzw. bei Einbau in den Trinkbecher 2 von dessen Rotations- bzw. Mittelachse 5 radial zur Innenseite der Wandung des Einsatzes 4b. Damit der Drehschieber 14 seine Beweglichkeit nicht verliert, besteht anders als beim feststehenden Wandelement 12 keine Verbindung zwischen dem äußeren Rand des Drehschiebers 14 und der Innenseite 4c des Einsatzes 4b, wobei der Spalt zwischen Drehschieber 14 und dem Einsatz 4b möglichst gering gehalten wird.

Für die drehbare Lagerung des Drehschiebers 14 um die Drehachse 15 am Wandelement 12 sind Scharnierelemente vorgesehen, die im dargestellten Ausführungsbeispiel gemäß den Figuren 4 und 5 aus hülsenförmigen Elementen 16a, 16b bestehen, die den als Stab ausgebildeten inneren Seitenrand 14a umfassen und somit für diesen stabförmigen inneren Seitenrand 14a eine Drehlagerung bilden. Wie die Figuren 2, 4 und 5 ferner erkennen lassen, sitzt das Scharnierelement 16a an der Oberseite und das Scharnierelement 16b etwa In der Mitte des feststehenden Wandelementes 12. Es ist aber auch denkbar, stattdessen oder zusätzlich ein Scharnierelement an der im eingebauten Zustand benachbart zum Boden des Hohlkörpers 4 gelegenen Unterseite vorzusehen; um die Steifigkeit der gesamten Anordnung noch weiter zu erhöhen, wäre in diesem Zusammenhang ferner zu erwägen, dieses zusätzliche Scharnier mit einem nach unten in eine entsprechende Aussparung Im Boden 4d des Einsatzes 4b ragenden Fortsatz zu versehen, wodurch sich eine noch bessere Fixierung der gesamten Anordnung aus feststehendem Wandelement 12 und drehbarem Drehschieber 14 erzielen lässt.

Wie die Figuren 4 und 5 ferner erkennen lassen, ist der Drehschieber 14 an seinem Oberteil mit einem perforierten Abschnitt 14b versehen, der flüssigkeitsdurchlässig ist und ein Überschwappen der Flüssigkeit über den Drehschieber 12 bei dessen Drehbewegung verhindert.

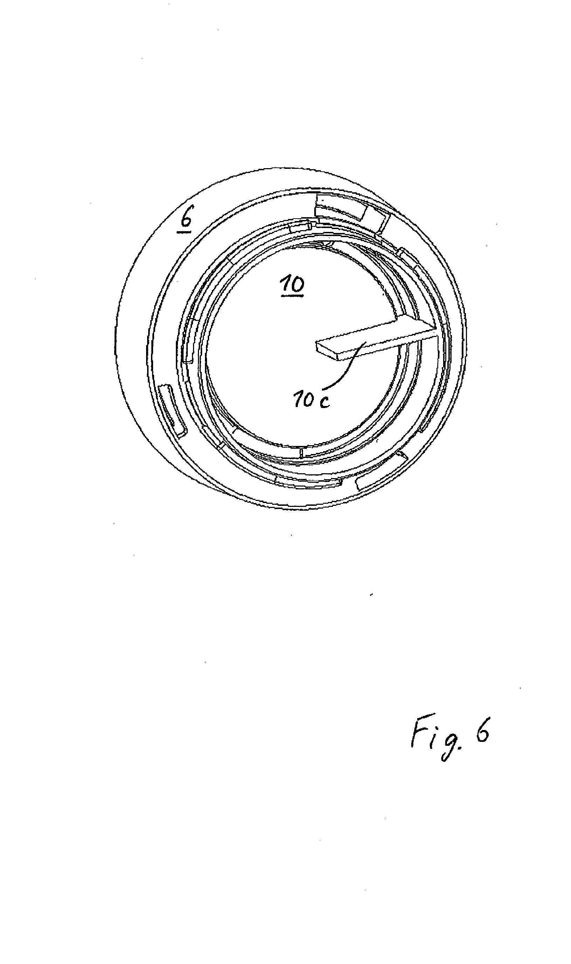

Wie insbesondere die Figuren 4 und 5 außerdem noch erkennen lassen, ist der Drehschieber 14 an seiner Oberseite mit einem im Wesentlichen plattenförmigen Fortsatz 14c versehen, der nach oben in Richtung des Ringes 6 ragt und etwa in der Ebene des übrigen Abschnittes des Drehschiebers 14 liegt. Dieser Fortsatz 14c dient dazu, eine lösbare, drehfeste Kopplung mit dem Deckel 10 herzustellen, wenn dieser um seine Drehachse 11 (Fig. 1) in die in den Figuren 1 und 2 gezeigte Schließstellung gedreht wird. Hierzu ist an der Unterseite des Deckels 10 ein entsprechender radial ausgerichteter, plattenförmiger Vorsprung 10c ausgebildet, der in Fig. 6 erkennbar gezeigt ist und während der Drehbewegung des Deckels 10 in flächige Anlage an den Fortsatz 14c des Drehschiebers 14 gelangt, um die Drehbewegung des Deckels 10 entsprechend auf den Drehschieber 14 zu übertragen. Dieser Zustand ist in Fig. 2 erkennbar, wo der Vorsprung 10c des Deckels 10 in flächiger Anlage an den Fortsatz 14c des Drehschiebers 14 gezeigt ist. Der Vorsprung 10c des Deckels 10 wirkt somit als Mitnehmer, um nach Anlage an den Fortsatz 14c den Drehschieber 14 in die Schließstellung mitzunehmen.

Da im beschriebenen Ausführungsbeispiel der Vorsprung 10c des Deckels 10 und der Fortsatz 14c des Drehschiebers 14 bei der Drehbewegung des Deckels 10 in seine Schließstellung nur in lose flächige Anlage aneinander gelangen, hat dies zur Folge, dass sich bei einer umgekehrten Drehbewegung des Deckels 10 in seine Öffnungsstellung dessen Vorsprung 10c vom Fortsatz 14c des Drehschiebers 14 ohne weiteres löst.

Ferner lassen die Figuren 2 und 5 erkennen, dass an der Oberseite des feststehenden Wandelementes 12 ein plattenförmiges Abschlusselement 18 angeordnet ist, das sich etwa rechtwinklig zum Wandelement 12 erstreckt und demnach sozusagen horizontal liegt, Dabei Ist das Abschlusselement 18 im dargestellten Ausführungsbeispiel mit einem radialen Seitenrand 18a am oberen Rand des Wandelementes 12 befestigt und kann mit diesem auch einstückig verbunden sein. Somit erstreckt sich das Abschlusselement 18 in Umfangsrichtung des Hohlkörpers 4 von dem feststehenden Wandelement 12 weg. Die dem Betrachter von Figur 2 zugewandte Seite des Wandelementes 12 bildet diejenige Seite, mit der das Abschlusselement 18 abschließt und wo es nicht darüber hinaus ragt. Das Abschlusselement 18 hat die Form eines Tortenstücks bzw. Kreissektors und schließt mit seinem äußeren gekrümmten Rand 18ban der Innenseite 4c des Einsatzes 4b (vorzugsweise im Wesentlichen dichtend) ab. Wie die Figuren 2 und 5 ferner erkennen lassen, weist das Abschlusselement 18 einen weiteren radialen Seitenrand 18c auf, der in einem Winkelabstand zum radialen Seitenrand 18a angeordnet ist und frei liegt.

Wie insbesondere die Figuren 4 und 5 erkennen lassen, bildet der Ring 6, das an diesem befestigte Wandelement 12 und der am Wandelement 12 angelenkte Drehschieber 14 eine Baueinheit, die durch die Trinkbecheröffnung 8 in den Hohlkörper 4 eingesetzt wird und bei Bedarf wieder herausgenommen bzw. ausgewechselt werden kann. Fig. 2 zeigt diese Baueinheit, welche in nachfolgend noch näher zu erläuternder Weise einen Drehmechanismus zum Einkapseln von Aromafeststoffen bildet, in einem vollständig in den Hohlkörper 4 des Trinkbechers 2 eingesetzten Zustand.

Nachfolgend wird die Arbeitsweise der zuvor beschriebenen Anordnung näher erläutert.

Zunächst muss die Trinkbecheröffnung 8 offen sein, indem der Deckel 10 abgenommen ist. Dann wird durch die Trinkbecheröffnung 8 in den Hohlraum des Einsatzes 4b des Hohlkörpers 4 ein zu verarbeitender Stoff eingefüllt, bei welchem es sich gewöhnlich um Teegut oder um gemahlenen Kaffee und somit um einen Aromafeststoff handelt. Um sicherzustellen, dass dieser Stoff an der gewünschten 'richtigen' Seite des Wandelementes 12 und des Drehschiebers 14 und somit in den gewünschten 'richtigen' Abschnitt des Hohlraumes des Einsatzes 4b eingefüllt wird, sollte der Drehschieber 14 so weit in eine Anfangsstellung zurückgeschwenkt werden, dass er am feststehenden Wandelement 12 im Wesentlichen flächig anliegt, und zwar an derjenigen Seite des Wandelementes 12, die vom Abschlusselement 18 weg weist und von der somit das Abschlusselement 18 nicht übersteht. Dies ist die dem Betrachter der Figuren 2 und 4 zugewandte Seite des Wandelementes 12. Ferner wird der Hohlkörper 4 bzw. dessen innerer Einsatz 4b mit, insbesondere bereits zuvor erhitzter, Flüssigkeit, vorzugsweise Wasser, befüllt. Das Befüllen mit dem erwähnten Stoff und mit der erwähnten Flüssigkeit kann auch in umgekehrter Reihenfolge stattfinden.

Anschließend - vorzugsweise nach Ablauf einer bestimmten Ziehzeit - wird der Drehschieber 14 einer Drehbewegung um seine Drehachse 15 in Richtung des in den Figuren 2, 4 und 5 gezeigten Pfeils A unterworfen, bis er in Anlage an den freien radialen Seitenrand 18c des Abschlusselementes 18 gelangt. Somit dient dieser Rand 18c des Abschlusselemantes 18 als Anschlag für den Drehschieber 14 und definiert die Endstellung des Drehschiebers 14. Die Endstellung des Drehschiebers 14 ist in Fig. 2 nur anhand des über das Abschlusselement 18 hinausragenden Fortsatzes 14c erkennbar. Dadurch, dass der Drehschieber 14 in seiner Endstellung am radialen Rand 18c des Abschlusselementes 18 anliegt, verbleibt der Drehschieber 14 in seiner Endstellung in einem Winkelabstand zum feststehenden Wandelement 12, welcher etwa dem Winkelabstand zwischen den Rändern 18a und 18c des Abschlusselementes 18 entspricht. Dadurch wird in der Endstellung des Drehschiebers 14 ein (in den Figuren nicht näher bezeichneter) Raum gebildet, der in radialer Richtung vom feststehenden Wandelement 18 einerseits und vom sich in seiner Endstellung befindlichen Drehschieber 14 andererseits und nach unten vom Boden 4d des Einsatzes 4b des Hohlkörpers 4 und nach oben vom Abschlusselement 18 begrenzt wird. In diesen Raum wird durch die Drehbewegung des Drehschiebers 14 in Richtung des Pfeils A der in der Flüssigkeit befindliche Stoff verbracht, wodurch der Kontakt des Stoffes zur umgebenden Flüssigkeit unterbrochen wird und nun aus diesem Stoff keine weiteren Aromastoffe mehr in die Flüssigkeit abgegeben werden können. In der Endstellung des Drehschiebers 14 ist der Stoff im Wesentlichen isoliert von der umgebenden Flüssigkeit, da der Stoff in dem zuvor erwähnten Raum zwischen Wandelement 12 und Drehschieber 14 sowie Boden 4d und Abschlusselement 18 eingekapselt wird. Nun ist der Trinkbecher 2 für die Entnahme der aromatisierten Flüssigkeit präpariert, so dass der Deckel 10 von der Trinkbecheröffnung 8 abgenommen werden kann. Da während der Drehbewegung des Drehschiebers 14 eine Verdrängung der Flüssigkeit stattfindet, strömt die Flüssigkeit durch den perforierten Abschnitt 14b des Drehschiebers 14, um somit ein Überschwappen der Flüssigkeit über den Drehschieber 14 hinweg zu vermeiden.

Um den Drehschieber 14 in die zuvor erläuterte Drehbewegung in Richtung des Pfeils A zur Einkapselung des Stoffes zu versetzen, wird der Deckel 10 in der bereits zuvor geschilderten Weise benutzt. Wird nämlich der Deckel 10 um seine Drehachse 11 (Fig. 1) in die Schließstellung gedreht, gelangt der an seiner Unterseite angeordnete Vorsprung 10c in Anlage an den Fortsatz 14c des Drehschiebers 14 und nimmt den Drehschieber 14 in seine Endstellung mit. Selbstverständlich muss die Anordnung des feststehenden Wandelementes 12 und des Drehschiebers 14 einerseits und die Anordnung des Deckels 10 andererseits so aufeinander abgestimmt sein, dass eine Drehbewegung des Deckels 10 zur Folge hat, dass der Drehschieber 14 in seine zuvor beschriebene Endstellung verschwenkt wird. Außerdem muss die vom Benutzer erzeugte Drehbewegung des Deckels 10 natürlich in der gleichen Richtung gemäß Pfeil A wie die Drehbewegung des Drehschiebers 10 stattfinden, so dass der Drehschieber 14 die gleiche Drehrichtung wie der Deckel 10 hat.

Im zuvor beschriebenen Ausführungsbeispiel weist der die Aromafeststoffe einkapselnde Raum, der vom feststehenden Wandelement 12 und dem in seiner Endstellung befindlichen Drehschieber 14 begrenzt wird, über die axiale Länge einen im Wesentlichen gleichbleibenden Querschnitt auf. Alternativ ist es aber auch denkbar, den Drehschieber und/oder das feststehende Wandelement so auszubilden, dass sich der erwähnte Raum in der Endstellung des Drehschiebers in Richtung auf den Boden 4d verjüngt und sich ggf. der in seiner Endstellung befindliche Drehschieber 14 und das feststehenden Wandelement 12 in einem von der Trinkbecheröffnung 8 entfernten Abschnitt bis zum Boden 4d im Wesentlichen berühren.

Während im zuvor beschriebenen Ausführungsbeispiel eine Bajonettverschluss-Konstruktion verwendet wird, um den Deckel 10 wahlweise in seine Schließstellung oder in seine Öffnungsstellung zu verdrehen, ist es selbstverständlich auch alternativ denkbar, eine Schraubverschluss-Konstruktion vorzusehen.

Abschließend sei noch angemerkt, dass die zuvor anhand eines Ausführungsbeispiels beschriebene Vorrichtung vollständig aus Kunststoff bestehen kann.

## Patentansprüche

1. Vorrichtung zum Einkapseln von in eine Flüssigkeit, insbesondere Wasser, gegebenen Aromafeststoffen, insbesondere Teegut oder Kaffee, mit einem feststehenden Element (12) und einem zwischen einer Anfangsstellung und einer Endstellung um eine Drehachse (15) am feststehenden Element (12) drehbar gelagerten flügelförmigen Drehschieber (14), der in seiner Endstellung einen die Aromafeststoffe aufnehmenden Raum begrenzt, wobei die Vorrichtung zum Einbau in einen Behälter (2) ausgebildet ist, dessen Oberseite zum Einfüllen und zur Abgabe der Flüssigkeit eine Öffnung (8) aufweist, die durch einen Deckel (10) verschließbar ist, welcher zum Schließen und Öffnen der Behälteröffnung (8) einer Drehbewegung unterworfen wird, **dadurch gekennzeichnet, dass**
der Drehschieber (14) mindestens ein Eingriffsmittel (14c) aufweist, das so ausgebildet ist, dass es in berührende Anlage an einen Abschnitt (10c) des Deckels (10) zumindest während dessen Drehbewegung zum Schließen der Behälteröffnung (8) bringbar ist, wodurch der Drehschieber (14) in seine Endstellung drehbar ist,
das feststehende Element (12) mit seiner bei Einbau der Vorrichtung In den Behälter (2) zur Behälteröffnung (8) benachbarten Oberseite an einem Ring (6) befestigt ist, der bei Einbau der Vorrichtung in den Behälter (2) dessen Öffnung (8) begrenzt,
in der Endstellung des Drehschiebers (14) der die Aromafeststoffe aufnehmende Raum nicht nur vom feststehenden Element (12) und dem Drehschieber (14), sondern an seiner bei Einbau der Vorrichtung in den Behälter (2) zur Behälteröffnung (8) benachbarten Oberseite durch ein oberes Abschlusselement (18) begrenzt wird, und
der Ring (6), das feststehende Element (12) und der Drehschieber (14) eine Baueinheit bilden, die durch die Behälteröffnung (8) in den Behälter (2) einsetzbar und durch diese wieder herausnehmbar ist.

2. Vorrichtung nach Anspruch 1, **dadurch gekennzeichnet, dass** das Eingriffsmittel (14c) einen, vorzugsweise platten- oder stiftförmigen, Fortsatz (14c) aufweist, der bei Einbau der Vorrichtung in den Behälter (2) von einem zur Behälteröffnung (8) benachbarten Abschnitt des Drehschiebers (14) in Richtung auf die Behälteröffnung (8), in die Behälteröffnung (8) hinein oder durch die Behälteröffnung (8) hindurch ragt und in, vorzugsweise berührenden, Eingriff mit einem Abschnitt (10c) des Deckels (10) bringbar ist.

3. Vorrichtung nach Anspruch 1 oder 2, **dadurch gekennzeichnet, dass** der Drehschieber (14) am feststehenden Element (12) mithilfe von zwei Scharnieren (16a, 16b) drehbar gelagert ist, von denen das eine Scharnier (16a) an einem Ende des Drehschiebers (14) und/oder des feststehenden Elementes (12) und das andere Scharnier (16b) entweder an einer Stelle zwischen den beiden Enden des Drehschiebers und/oder des feststehenden Elementes oder am anderen Ende des Drehschiebers und/oder des feststehenden Elementes angeordnet ist, oder der Drehschieber am feststehenden Element mithilfe von drei Scharnieren drehbar gelagert ist, von denen ein erstes Scharnier an einem Ende des Drehschiebers und/oder des feststehenden Elementes, ein zweites Scharnier an dem gegenüberliegenden anderen Ende des Drehschiebers und/oder des feststehenden Elementes und ein drittes Scharnier an einer Stelle zwischen den beiden Enden des Drehschiebers und/oder des feststehenden Elementes angeordnet ist.

4. Vorrichtung nach mindestens einem der vorangegangenen Ansprüche, **dadurch gekennzeichnet, dass** die Drehachse (15) des Drehschiebers (14) entlang eines Randes des feststehenden Elementes (12) verläuft.

5. Vorrichtung nach mindestens einem der vorangegangenen Ansprüche, **dadurch gekennzeichnet, dass** das obere Abschlusselement (18) plattenförmig ausgebildet ist.

6. Vorrichtung nach mindestens einem der vorangegangenen Ansprüche, **dadurch gekennzeichnet, dass** das obere Abschlusselement (18) am feststehenden Element (12), vorzugsweise einstückig, befestigt ist.

7. Vorrichtung nach mindestens einem der vorangegangenen Ansprüche, **dadurch gekennzeichnet, dass** der Drehschieber (14) einen flüssigkeitsdurchlässigen Abschnitt (14b) aufweist.

8. Vorrichtung nach Anspruch 7, **dadurch gekennzeichnet, dass** der flüssigkeitsdurchlässige Abschnitt (14b) am bei Einbau in den Behälter (2) benachbart zur Behälteröffnung (8) gelegenen oberen Teil des Drehschiebers (14) vorgesehen ist.

9. Vorrichtung nach mindestens einem der vorangegangenen Ansprüche, **dadurch gekennzeichnet, dass** der Drehschieber (14) als im Wesentlichen ebenes plattenförmiges Element ausgebildet ist.

10. Behälter, insbesondere Trinkbecher, mit einem, vorzugsweise becherförmigen, Behältergehäuse (4), der von einer Wandung und einem Boden begrenzt wird und dessen dem Boden gegenüberliegende Oberseite zum Einfüllen und zur Abgabe von Aromafeststoffen, insbesondere Teegut oder Kaffee, enthaltender Flüssigkeit eine Behälteröffnung aufweist, und mit einem Deckel zum Verschließen der Behälteröffnung (8), wobei der Deckel so ausgebildet ist, dass er zum Schließen und Öffnen der Behälteröffnung einer Drehbewegung unterworfen wird, **gekennzeichnet durch** eine Vorrichtung nach mindestens einem der vorangegangenen Ansprüche.

11. Behälter nach Anspruch 10, **dadurch gekennzeichnet, dass** der Deckel (10) um eine Deckeldrehachse (11) drehbar ist, die bei Verschließen der Behälteröffnung (8) durch den Deckel (10), im Wesentlichen mit der Drehachse (15) des Drehschiebers (14) zusammenfällt, und/oder das Behältergehäuse (4) als Rotationskörper ausgebildet ist, mit dessen Rotationsachse (5) die Drehachse (15) des Drehschiebers (14) im Wesentlichen zusammenfällt.

12. Behälter nach Anspruch 10 oder 11, **dadurch gekennzeichnet, dass** der Drehschieber (14) als sich radial von seiner Drehachse (15) zur Innenseite (4c) der Wandung des Behältergehäuses (4) erstreckender Flügel ausgebildet ist.

13. Behälter nach mindestens einem der Ansprüche 10 bis 12, **dadurch gekennzeichnet, dass** sich das feststehende Element (12) von der Wandung (4c) des Behältergehäuses (4) im Wesentlichen radial zur Drehachse (15) des Drehschiebers (14) erstreckt.

14. Behälter nach Anspruch 13, **dadurch gekennzeichnet, dass** das feststehende Element (12) im Behältergehäuse so angeordnet ist, dass es mit der Innenseite der Wandung (4c) und dem Boden des Behältergehäuses (4) im Wesentlichen abschließt, wobei vorzugsweise in der Innenseite (4c) der Wandung und im Boden (4d) des Behältergehäuses (4) eine, vorzugsweise nutförmige, Aussparung (13a, 13b) zur Aufnahme des benachbarten Randabschnittes des feststehenden Elementes (12) ausgebildet ist.

15. Behälter nach Anspruch 13 oder 14, **dadurch gekennzeichnet, dass** im Boden des Behältergehäuses eine, vorzugsweise als Sackloch vorgesehene, Vertiefung zur Aufnahme des benachbarten Abschnittes eines unteren Scharniers ausgebildet ist.

## Claims

1. Device for encapsulating flavouring solids added to a liquid, in particular water, in particular tea products or coffee, comprising a fixed element (12) and a blade-like rotary slide (14) mounted rotatably between a starting position and an end position about an axis of rotation (15) on the fixed element (12), which rotary slide in its end position delimits a space for holding the flavouring solids, the device being designed for installing into a container (2), the upper side of which has an opening (8) for filling and releasing the liquid which can be closed by a lid (10) which is subjected to a rotary movement for closing and opening the container opening (8),
**characterised in that**
the rotary slide (14) comprises at least one engaging means (14c) which is configured so that it can be brought into touching contact with a section (10c) of the lid (10) at least during its rotary moment for closing the container opening (8), whereby the rotary slide (14) can be rotated into its end position,
the fixed element (12) with its upper side adjacent to the container opening (8) on the installation of the device into the container (2) is secured to a ring (6), which on installing the device into the container (2) delimits the opening (8) thereof,
in the end position of the rotary slide (14) the space holding the flavouring solids is not only delimited by the fixed element (12) and the rotary slide (14) but on its surface adjacent to the container opening (8) on installing the device into the container (2) is delimited by an upper closing element (18) and
the ring (6), the fixed element (12) and the rotary slide (14) form a component which can be inserted through the container opening (8) into the container (2) and can be removed again through the latter.

2. Device according to claim 1, **characterised in that** the engaging means (14c) comprises a preferably plate or pin-like extension (14c), which when installing the device into the container (2) from a section of the rotary slide (14) adjacent to the container opening (8) in the direction of the container opening (8) projects into the container opening (8) or through the container opening (8) and can be brought preferably into touching engagement with a section (10c) of the lid (10).

3. Device according to claim 1 or 2, **characterised in that** the rotary slide (14) is mounted rotatably on the fixed element (12) by means of two hinges (16a, 16b), one hinge (16a) being arranged at one end of the rotary slide (14) and/or the fixed element (12) and the other hinge (16b) being arranged either at a point between the two ends of the rotary slide and/or the fixed element or at the other end of the rotary slide and/or the fixed element, or the rotary slide is mounted rotatably on the fixed element by means of three hinges, a first hinge of which being arranged at one end of the rotary slide and/or the fixed element, a second hinge being arranged at the opposite other end of the rotary slide and/or the fixed element and a third hinge being arranged at a point between the two ends of the rotary slide and/or the fixed element.

4. Device according to at least one of the preceding claims, **characterised in that** the axis of rotation (15) of the rotary slide (14) runs along an edge of the fixed element (12).

5. Device according to at least one of the preceding claims, **characterised in that** the upper end element (18) is designed to be plate-like.

6. Device according to at least one of the preceding claims, **characterised in that** the upper end element (18) is secured, preferably in one piece, to the fixed element (12).

7. Device according to at least one of the preceding claims, **characterised in that** the rotary slide (14) has a section (14b) that is permeable to liquid.

8. Device according to claim 7, **characterised in that** the liquid-permeable section (14b) is provided on the upper part of the rotary slide (14) positioned adjacent to the container opening (8) on installation into the container (2).

9. Device according to at least one of the preceding claims, **characterised in that** the rotary slide (14) is designed as an essentially flat, plate-like element.

10. Container, in particular a drinking cup, comprising a preferably cup-like container housing (4), which is delimited by a wall and base, and the upper side of which opposite the base comprises a container opening for filling and for releasing liquid containing flavouring solids, in particular tea products or coffee, and with a lid for closing the container opening (8), the lid being designed so that it is subjected to a rotary movement for closing and opening the container opening, **characterised by** a device according to at least one of the preceding claims.

11. Container according to claim 10, **characterised in that** the lid (10) can be rotated about a lid axis of rotation (11), which on closing the container opening (8) with the lid (10) coincides essentially with the axis of rotation (15) of the rotary slide (14), and/or the container housing (4) is configured as a rotational body, and the axis of rotation (5) of the latter coincides essentially with the axis of rotation (15) of the rotary slide (14).

12. Container according to claim 10 or 11, **characterised in that** the rotary slide (14) is designed as a blade extending radially from its axis of rotation (15) to the inner side (4c) of the wall of the container housing (4).

13. Container according to at least one of claims 10 to 12, **characterised in that** the fixed element (12) extends from the wall (4c) of the container housing (4) essentially radially relative to the axis of rotation (15) of the rotary slide (14).

14. Container according to claim 13, **characterised in that** the fixed element (12) is arranged in the container housing so that it closes essentially with the inner side of the wall (4c) and the base of the container housing (4), wherein preferably in the inner side (4c) of the wall and in the base (4d) of the container housing (4) a preferably, groove-like recess (13a, 13b) is formed for receiving the adjacent edge section of the fixed element (12).

15. Container according to claim 13 or 14, **characterised in that** in the base of the container housing a depression is formed, preferably in the form of a blind bore, for receiving the adjacent section of a lower hinge.

## Revendications

1. Dispositif pour encapsuler des matières solides aromatiques données dans un liquide, en particulier dans de l'eau, en particulier du thé ou du café, comprenant un élément fixe (12) et un tiroir rotatif (14) présentant une forme d'ailette et installé de manière à pouvoir tourner au niveau de l'élément fixe (12), autour d'un axe de rotation (15), entre une position de départ et une- position finale, lequel tiroir rotatif délimite, dans sa position finale, un espace recevant les matières solides aromatiques, le dispositif étant réalisé pour être monté dans un récipient (2), le côté supérieur dudit récipient servant au remplissage et à la distribution du liquide présentant une ouverture (8), qui peut être fermée par un couvercle (10), lequel est soumis à un mouvement de rotation pour fermer et ouvrir l'ouverture de récipient (8),
**caractérisé en ce**
**que** le tiroir rotatif (14) présente au moins un moyen de coopération (14c), qui est réalisé de telle manière qu'il peut être amené en appui avec contact au niveau d'une section (10c) du couvercle (10) au moins au cours du mouvement de rotation de celui-ci aux fins de la fermeture de l'ouverture de récipient (8), ce qui permet de faire tourner le tiroir rotatif (14) de manière à l'amener dans sa position finale,
**que** l'élément fixe (12) est fixé, par son côté supérieur adjacent à l'ouverture de récipient (8) lors du montage du dispositif dans le récipient (2), à une bague (6), qui délimite l'ouverture (8) du récipient (2) lors du montage du dispositif dans ledit récipient,
**que** dans la position finale du tiroir rotatif (14), l'espace recevant les matières solides aromatiques est délimité non seulement par l'élément fixe (12) et le tiroir rotatif (14), mais également, au niveau de son côté supérieur adjacent à l'ouverture de récipient (8) lors du montage du dispositif dans le récipient (2), par un élément de terminaison (18) supérieur, et
**que** la bague (6), l'élément fixe (12) et le tiroir rotatif (14) forment une unité modulaire, qui peut être insérée dans le récipient (2) par l'ouverture de récipient (8) et par celle-ci peut être retirée à nouveau.

2. Dispositif selon la revendication 1, **caractérisé en ce que** le moyen de coopération (14c) présente un prolongement (14c) de préférence en forme de plaque ou de tige, lequel prolongement dépasse, lorsque le dispositif est monté dans le récipient (2), à partir d'une section, adjacente à l'ouverture de récipient (8), du tiroir rotatif (14), en direction de l'ouverture de récipient (8), en entrant dans l'ouverture de récipient (8) ou en traversant l'ouverture de récipient (8) et peut être amené en prise, de préférence avec contact, avec une section (10c) du couvercle (10).

3. Dispositif selon la revendication 1 ou 2, **caractérisé en ce que** le tiroir rotatif (14) est installé de manière à pouvoir tourner à l'aide de deux charnières (16a, 16b) au niveau de l'élément fixe (12), l'une (16a) des charnières étant disposée à une extrémité du tiroir rotatif (14) et/ou de l'élément fixe (12) et l'autre charnière (16b) étant disposée soit à un emplacement entre les deux extrémités du tiroir rotatif et/ou de l'élément fixe soit à l'autre extrémité du tiroir rotatif et/ou de l'élément fixe, ou en ce que le tiroir rotatif est installé de manière à pouvoir tourner au niveau de l'élément fixe à l'aide de trois charnières, une première charnière étant disposée à une extrémité du tiroir rotatif et/ou de l'élément fixe, une deuxième charnière étant disposée à l'autre extrémité opposée du tiroir rotatif et/ou de l'élément fixe et une troisième charnière étant disposée à un emplacement entre les deux extrémités du tiroir rotatif et/ou de l'élément fixe.

4. Dispositif selon au moins l'une quelconque des revendications précédentes, **caractérisé en ce que** l'axe de rotation (15) du tiroir rotatif (14) s'étend le long d'un bord de l'élément fixe (12).

5. Dispositif selon au moins l'une quelconque des revendications précédentes, **caractérisé en ce que** l'élément de terminaison (18) supérieur est réalisé en forme de plaque.

6. Dispositif selon au moins l'une quelconque des revendications précédentes, **caractérisé en ce que** l'élément de terminaison (18) supérieur est fixé au niveau de l'élément fixe (12), de préférence d'un seul tenant.

7. Dispositif selon au moins l'une quelconque des revendications précédentes, **caractérisé en ce que** le tiroir rotatif (14) présente une section perméable au liquide (14b).

8. Dispositif selon la revendication 7, **caractérisé en ce que** la section perméable au liquide (14b) est prévue au niveau de la partie supérieure du tiroir rotatif (14), laquelle partie supérieure est placée lors du montage dans le récipient (2) de manière adjacente par rapport à l'ouverture de récipient (8).

9. Dispositif selon au moins l'une quelconque des revendications précédentes, **caractérisé en ce que** le tiroir rotatif (14) est réalisé sous la forme d'un élément essentiellement plan en forme de plaque.

10. Récipient, en particulier, gobelet, comprenant un boîtier de récipient (4), de préférence en forme de gobelet, qui est délimité par une paroi et un fond et dont le côté supérieur opposé au fond servant au remplissage et à la distribution du liquide contenant des matières solides aromatiques, en particulier du thé ou du café, présente une ouverture de récipient, et comprenant un couvercle servant à fermer l'ouverture de récipient (8), le couvercle étant réalisé de telle manière qu'il est soumis à un mouvement de rotation aux fins de la fermeture et de l'ouverture de l'ouverture de récipient, **caractérisé par** un dispositif selon au moins l'une quelconque des revendications précédentes.

11. Récipient selon la revendication 10, **caractérisé en ce que** le couvercle (10) peut tourner autour d'un axe de rotation de couvercle (11), qui coïncide, lors de la fermeture de l'ouverture de récipient (8) par le couvercle (10), essentiellement avec l'axe de rotation (15) du tiroir rotatif (14), et/ou **en ce que** le boîtier de récipient (4) est réalisé sous la forme d'un corps de rotation, l'axe de rotation (15) du tiroir rotatif (14) coïncidant essentiellement avec l'axe de rotation (5) du corps de rotation.

12. Récipient selon la revendication 10 ou 11, **caractérisé en ce que** le tiroir rotatif (14) est réalisé sous la forme d'une ailette s'étendant de manière radiale depuis son axe de rotation (15) vers le côté intérieur (4c) de la paroi du boîtier de récipient (4).

13. Récipient selon au moins l'une quelconque des revendications 10 à 12, **caractérisé en ce que** l'élément fixe (12) s'étend de la paroi (4c) du boîtier de récipient (4) essentiellement de manière radiale par rapport à l'axe de rotation (15) du tiroir rotatif (14).

14. Récipient selon la revendication 13, **caractérisé en ce que** l'élément fixe (12) est disposé dans le boîtier de récipient de telle manière qu'il est essentiellement bordé par le côté intérieur de la paroi (4c) et le fond du boîtier de récipient (4), sachant que de préférence un évidement (13a, 13b), de préférence en forme de rainure, servant à recevoir la section de bord adjacente de l'élément fixe (12) est réalisé dans le côté intérieur (4c) de la paroi et dans le fond (4d) du boîtier de récipient (4).

15. Récipient selon la revendication 13 ou 14, **caractérisé en ce qu'**un renfoncement, prévu de préférence sous la forme d'un trou borgne, servant à recevoir la section adjacente d'une charnière inférieure est réalisé dans le fond du boîtier de récipient.
